Europäisches Patentamt

European Patent Office

Office européen des brevets

(19)

(11) Publication number : **0 135 502**
**B1**

(12) **EUROPEAN PATENT SPECIFICATION**

(45) Date of publication of patent specification :
09.09.87

(21) Application number : 84900060.9

(22) Date of filing : 30.12.83

(86) International application number :
PCT/FI 83/00082

(87) International publication number :
WO/8402775 (19.07.84 Gazette 84/17)

(51) Int. Cl.⁴ : **G 01 N 21/03**

(54) MICROCUVETTE SET.

(30) Priority : 07.01.83 FI 830056

(43) Date of publication of application :
03.04.85 Bulletin 85/14

(45) Publication of the grant of the patent :
09.09.87 Bulletin 87/37

(84) Designated contracting states :
AT BE CH DE FR GB LI LU NL SE

(56) References cited :
WO-A-82 /003 58
DE-A- 3 005 508
DE-B- 2 711 853
FI-B- 57 665
US-A- 4 201 478
US-A- 4 397 560

(73) Proprietor : **LABSYSTEMS OY**
**Pulttitie 9**
**SF-00810 Helsinki 81 (FI)**

(72) Inventor : **EKHOLM, Pertti**
**Sammatintie 6 L 130**
**SF-00550 Helsinki 55 (FI)**

(74) Representative : **Freed, Arthur Woolf et al**
**Reginald W. Barker & Co. 13 Charterhouse Square**
**London EC1M 6BA (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

EP 0 135 502 B1

## Description

The present invention is concerned with a microcuvette set incorporating several cuvettes disposed in a matrix form, and arranged so as to be handled as one whole unit, and in which the frame portion of the microcuvette set consists of a rectangular frame portion, designed so that two or more cuvette-set components can be attached to it in the longitudinal or transverse direction one after the other, each of the said cuvette-sets consisting of several cuvettes disposed in a line or matrix form and connected to each other or attached together by means of a support plate whose ends are fitted into the frame portion, and the middle portion of the frame portion being open at least within the area covered by the cuvettes in the cuvette-set components.

The object of the invention is to provide an arrangement by means of which several cuvette-set components in the linear or matrix form retained securely in position in the frame portion. This is important in view of treatment of the microcuvette set, e. g. during washing, dosage of liquids, or performance or measurement operations.

In DE-A-3 005 508 there is disclosed a microcuvette unit comprising a plurality of components in the form of a matrix which is arranged so that the cuvettes may be handled as one unit. The structural body of the microcuvette unit comprises a rectangular frame which is designed so that a plurality of cuvette components may be fitted to the frame, one after another. Each cuvette component comprises a plurality of cuvettes arranged in the form of a line or matrix and connected to each other directly of by means of support plates. The frame part of the microcuvette unit is open in the middle, at least within the area covered by the cuvettes in the cuvette components. The frame part contains two opposite sides which are provided with connecting means for joining the cuvette components to the frame part. These connecting means are different on different sides of the cuvette components so that their positions in relationship to each other may be readily determined and so that the identification of samples may be facilitated.

According to the invention, a microcuvette set (1) incorporating several cuvettes (5) disposed in a matrix form, and arranged so as to be handled as one whole unit, by means of a rectangular frame portion (2) in which two or more cuvette-sets (3) can be mounted, disposed one after the other either in the longitudinal or transverse direction, each of the said cuvette-sets (3) consisting of several cuvettes (5) disposed in a line or matrix form and inter-connected by means of a support plate (4), whose ends are fitted into the frame portion (2), the middle portion of the frame portion (2) being open at least within the area covered by the cuvettes (5) in the cuvette-sets (3), characterised in that the microcuvette set (1) comprises a rectangular locking frame (6), open at its middle portion at least within the area corresponding to the frame portion (2), which locking frame is securely retainable in position on the top face of the frame portion (2) against the ends of the support plates (4), e. g. by means of a friction or interference fit or snap-action, interfitting joint, so that the ends of the support plates (4) of the cuvette-set components (3) mounted in the frame portion (2) are retained securely between the top face of the frame portion (2) and the locking frame (6).

By means of the locking frame, all the different parts of the microcuvette set can be fixed to each other so that the microcuvette set can be handled as a single whole unit in any position whatsoever.

The invention comes out in more detail from the following description and from the attached drawing, wherein

Figure 1 is a side view of the locking frame,

Figure 2 shows a section along line A-A in Figure 1,

Figure 3 shows the microcuvette set as viewed from above, and

Figure 4 is a sectional view along line B-B in Figure 3.

The microcuvette set 1 consists of several parts. It comprises a rectangular frame portion 2, which is open in its middle portion and into which smaller units can be placed, which smaller units can be packed into this frame portion 2 one after the other. The size of the frame portion 2 is such that it is suitable for measurement in a photometer.

The number of cuvettes 5 in the cuvette-set components 3 is lower than 96, e. g. $4 \times 8 = 32$ of $6 \times 8 = 48$, $3 \times 8 = 24$, $1 \times 8 = 8$, or $1 \times 12 = 12$.

Two or more cuvette-sets 3 are arranged so as to be attached to the frame portion 2 one after the other, and each cuvette-set 33 consists of several cuvettes 5 in a line or matrix form and inter-connected by means of a support plate 4.

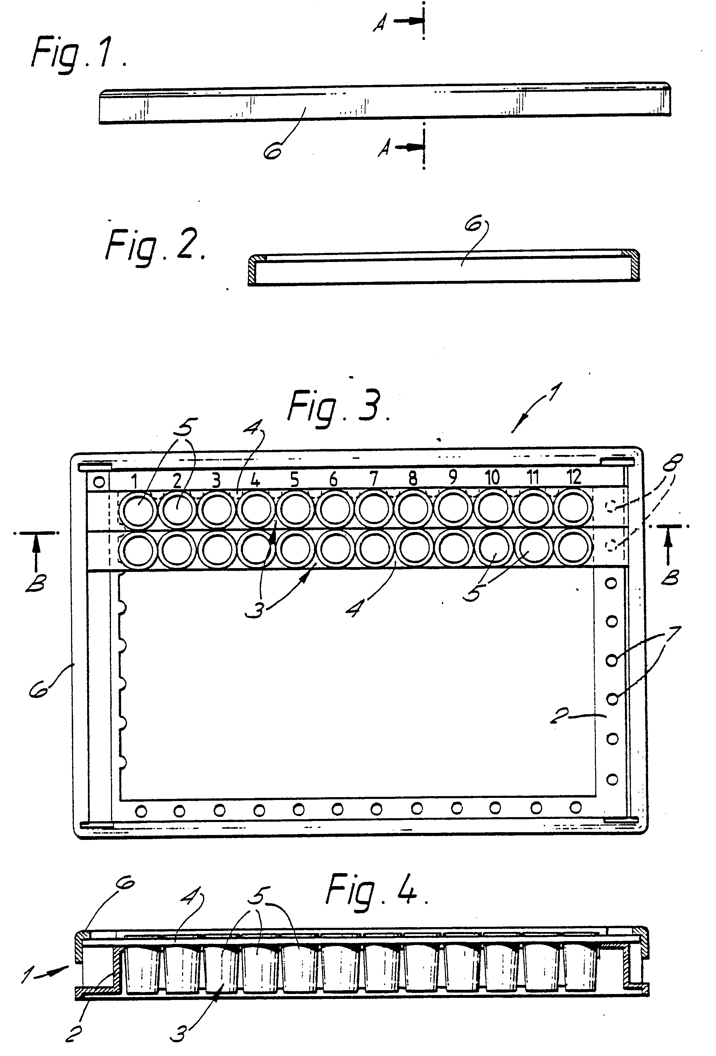

Figures 3 and 4 show cuvette-sets 3 of linear shape fitted into the frame portion 2. The top face of the frame portion 2 is provided with pins 7, as shown in Figure 3, and one end of the support plates 4 of the cuvette-sets 3 is provided with a hole 8, whereby the cuvette-sets 3 can be fitted into the frame portion 2 in one direction only.

The projections provided at the ends of the cuvette-sets 3, i. e. the ends of the support plates 4, remain on the top face of the frame portion 2, whereby the cuvette-set components 3 rest supported by the frame portion 2. The microcuvette set 1 additionally includes a rectangular locking frame 6, which is in its middle portion open at least within the area corresponding to the frame portion 2 and which is arranged so as to be attached to the top face of the frame portion 2, e. g., by means of a friction of interference fit or snap-action interfitting joint, or indeed any other way suitable for the purpose. Thus the ends of the support plates 4 of the cuvette-set components 3 fitted into the frame portion 2 are retained securely between the top face of the frame portion 2 and the locking frame 6.

The locking frame 6 keeps the cuvette-set components tightly and securely in position. The frame of the locking frame 6 is shaped in accordance with Fig. 2 so that it is very rigid. This assists the retention of the cuvette-set components. As the cross-sectional shape of the locking frame 6 is rectangular, and owing to the rigidity obtained by means of that shape, it has been possible to minimize the comsumption of material, and a low-weight locking frame 6 has been achieved. Also, the height of such a microcuvette set 1 is only about 1 mm higher than that of a conventional microtiter plate, so that the microcuvette set 1 can be used in apparatus designed for microtiter plates (e. g. photometers). The locking frame 6 is advantageously made of a plastics material by injection moulding.

## Claim

A microcuvette set (1) incorporating several cuvettes (5) disposed in a matrix form, and arranged so as to be handled as one whole unit, by means of a rectangular frame portion (2) in which two or more cuvette-sets (3) can be mounted, disposed one after the other either in the longitudinal or transverse direction, each of the said cuvette-sets (3) consisting of several cuvettes (5) disposed in a line or matrix form and inter-connected by means of a support plate (4), whose ends are fitted into the frame portion (2), the middle portion of the frame portion (2) being open at least within the area covered by the cuvettes (5) in the cuvette-sets (3), characterised in that the microcuvette set (1) comprises a rectangular locking frame (6), open at its middle portion at least within the area corresponding to the frame portion (2), which locking frame is securely retainable in position on the top face of the frame portion (2) against the ends of the support plates (4), e. g. by means of a friction or interference fit or snap-action, interfitting joint, so that the ends of the support plates (4) of the cuvette-set components (3) mounted in the frame portion (2) are retained securely between the top face of the frame portion (2) and the locking frame (6).

## Patentanspruch

Mikroküvettensatz (1) mit mehreren, in einer Matrixform angeordneten Küvetten (5), die so angeordnet sind, daß sie als eine gesamte Einheit gehandhabt werden können, und zwar mit Hilfe eines rechteckigen Rahmenabschnittes (2), in dem zwei oder mehrere hintereinander entweder in Längs- oder in Querrichtung vorgesehene Küvettensätze (3) angeordnet werden können, wobei jeder Küvettensatz (3) aus mehreren, in einer Reihe oder in Matrixform angeordneten Küvetten (5) besteht, die über eine Tragplatte (4) miteinander verbunden sind, deren Enden in den Rahmenabschnitt (2) eingepaßt sind, und wobei der Mittelteil des Rahmenabschnittes (2) wenigstens im durch die Küvetten (5) im Küvettensatz (3) abgedeckten Bereich offen ist, dadurch gekennzeichnet, daß der Mikroküvettensatz (1) einen rechteckigen Arretierrahmen (6) aufweist, der in seinem Mittelteil wenigstens innerhalb des dem Rahmenabschnitt (2) entsprechenden Bereiches offen ist, wobei der Arretierrahmen sicher in seiner Lage auf der oberen Fläche des Rahmenabschnittes (2) an den Enden der Tragplatten (4) gehalten werden kann, z. B. mittels Reibung, Festsitz, Einschnappwirkung, Paßverbindung, so daß die Enden der Tragplatten (4) der Küvettensatzkomponenten (3),die im Rahmenabschnitt (2) angeordnet sind, sicher zwischen der oberen Fläche des Rahmenabschnittes (2) und dem Arretierrahmen (6) gehalten sind.

## Revendication

Jeu de microcuvettes (1) comprenant plusieurs cuvettes (5) disposées en forme de matrice, et arrangées de façon à être manipulées comme une seule unité, au moyen d'une partie (2) formant cadre rectangulaire dans laquelle deux ou plusieurs jeux de cuvettes (3) peuvent être montés, disposés l'un après l'autre soit dans la direction longitudinale soit dans la direction transversale, chacun desdits jeux de cuvettes (3) comprenant plusieurs cuvettes (5) disposées en ligne ou en forme de matrice et interconnectées au moyen d'une plaque-support (4), dont les extrémités sont assemblées dans la partie formant cadre (2), la partie médiane de la partie formant cadre (2) étant ouverte au moins dans la zone couverte par les cuvettes (5) des jeux de cuvettes (3), caractérisé par le fait que le jeu des microcuvettes (1) comprend un cadre rectangulaire de blocage (6) ouvert dans sa partie médiane au moins dans la zone correspondant à la partie formant cadre (2) lequel cadre de blocage peut être maintenu en sécurité en place sur la face supérieure de la partie formant cadre (2) contre les extrémités des plaques-supports (4), par exemple au moyen d'un assemblage par frottement ou par interférence ou par enclenchement ou par assemblage de coopération, afin que les extrémités des plaques-supports (4) des composants des jeux de cuvettes (3) montés dans la partie formant cadre (2) soient maintenues en sécurité entre la face supérieure de la partie formant cadre (2) et le cadre de blocage (6).

Fig.1.

Fig.2.

Fig.3.

Fig.4.